Europäisches Patentamt

European Patent Office

Office européen des brevets

(19)

(11) EP 0 936 456 A1

(12) EUROPÄISCHE PATENTANMELDUNG

(43) Veröffentlichungstag:
18.08.1999 Patentblatt 1999/33

(51) Int. Cl.$^6$: G01M 1/02

(21) Anmeldenummer: 99100809.5

(22) Anmeldetag: 18.01.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 12.02.1998 DE 19805779

(71) Anmelder:
HOFMANN WERKSTATT-TECHNIK GMBH
D-64319 Pfungstadt (DE)

(72) Erfinder: Diez, Ulrich
51580 Reichshof (DE)

(74) Vertreter:
Nöth, Heinz, Dipl.-Phys.
Patentanwalt,
Mozartstrasse 17
80336 München (DE)

(54) Verfahren und Vorrichtung zur Bestimmung der Einpresstiefe eines Reifens an einem Scheibenrad eines Kraftfahrzeugs

(57) Ein Verfahren und eine Vorrichtung zur Bestimmung der Einpreßtiefe eines Scheibenrades eines Kraftfahrzeugrades, bei dem unter Zuhilfennahme einer Radauswuchtmaschine aus der Felgenbreite b, dem axialen Abstand d einer Anschlagfläche 16 der Spann- einrichtung und dem axialen Abstand a oder c eines der beiden Meßpunkte für die Felgenbreite die Einpreßtiefe E bestimmt wird.

Fig. 1

## Beschreibung

Die Erfindung betrifft ein Verfahren nach dem Oberbegriff des Patentanspruches 1 und eine Vorrichtung nach dem Oberbegriff des Patentanspruches 4.

Beim Umrüsten der Bereifung von Kraftfahrzeugen, insbesondere auf Breitreifen, kommen bei der Bereifung der Kraftfahrzeugräder Felgen bzw. Scheibenräder mit unterschiedlichen Einpreßtiefen für die Vorder- und Hinterachsen des Fahrzeugs zum Einsatz. Da die Scheibenräder jedoch gleiches Aussehen haben, ergibt sich die Gefahr von Verwechslungen, so daß die Vorder- und Hinterachsen des Fahrzeugs mit den falschen Rädern bestückt sind.

Aufgabe der Erfindung ist es daher, ein Verfahren und eine Vorrichtung zu schaffen, mit denen die Einpreßtiefe eines Scheibenrades eines Kraftfahrzeugs einfach bestimmt werden kann.

Diese Aufgabe wird beim Verfahren durch die kennzeichnenden Merkmale des Patentanspruches 1 und mit Hilfe der im Patentanspruch 4 angegebenen Vorrichtung gelöst.

Zur Lösung der Aufgabe dient in vorteilhafter Weise eine ohnehin in einer Kraftfahrzeugwerkstatt erforderliche Radauswuchtmaschine, wobei die Abtastmittel zur Bestimmung der Geometriedaten des Rades, die zur Einstellung der Auswerteelektronik der Radauswuchtmaschine auf das jeweilige auszuwuchtende Kraftfahrzeugrad erforderlich sind, und die Geometriedaten mitverwendet werden können.

Gemäß der Erfindung läßt sich die Einpreßtiefe aus der Felgenbreite und dem Abstand, den eine an der Hauptwelle der Radauswuchtmaschine vorgesehene und senkrecht zur Achse der Hauptwelle verlaufende, insbesondere scheibenförmige Anschlagfläche, an welcher das Scheibenrad mit seiner Scheibeninnenfläche beim Unwuchtmeßvorgang anliegt, gegenüber einer maschinenfesten Referenzebene hat, sowie aus dem Abstand eines der beiden Felgenhörner bzw. eines der beiden Meßpunkte für die Felgenbreite von der maschinenfesten Referenzebene, ermitteln. Diese Referenzebene kann die Ebene sein, von welcher aus die Abstände des auszuwuchtenden Kraftfahrzeugrades, seiner Felgenhörner und seiner Ausgleichsebenen beispielsweise durch Abtastmittel ermittelt werden. Derartige Abtastmittel beispielsweise in Form eines Felgenbreitentasters oder in Form von an der Auswuchtmaschine verschiebbar gelagerten Meßtastern für das innere und äußere Felgenhorn sind bekannt (Hofmann Betriebsanleitung, Radauswuchtmaschine Geodyna 88/88m Impressum 941214509.86).

Diese Geometriedaten, welche der Auswerteelektronik zur Bestimmung des jeweiligen Ausgleichsvektors in der entsprechenden Ausgleichsebene am Kraftfahrzeugrad eingegeben werden, können zur Bestimmung der Einpreßtiefe des Scheibenrades ausgewertet und durch eine an der Maschine vorgesehene Anzeigeeinrichtung angezeigt werden. Hierdurch erhält die Serviceperson eine Information, an welcher Achse (Vorder-oder Hinterachse) des Kraftfahrzeugrades das gegebenenfalls gleichzeitig ausgewuchtete Kraftfahrzeugrad montiert werden muß.

Anhand der Figuren wird die Erfindung noch näher erläutert. Es zeigt

Fig. 1 schematisch die an einer Auswuchtmaschine mit aufgespannten Kraftfahrzeugrad für die Ermittlung der Raddaten erforderlichen Hilfsmittel zur Bestimmung der Einpreßtiefe; und

Fig. 2 eine weitere Möglichkeit der Raddatenbestimmung.

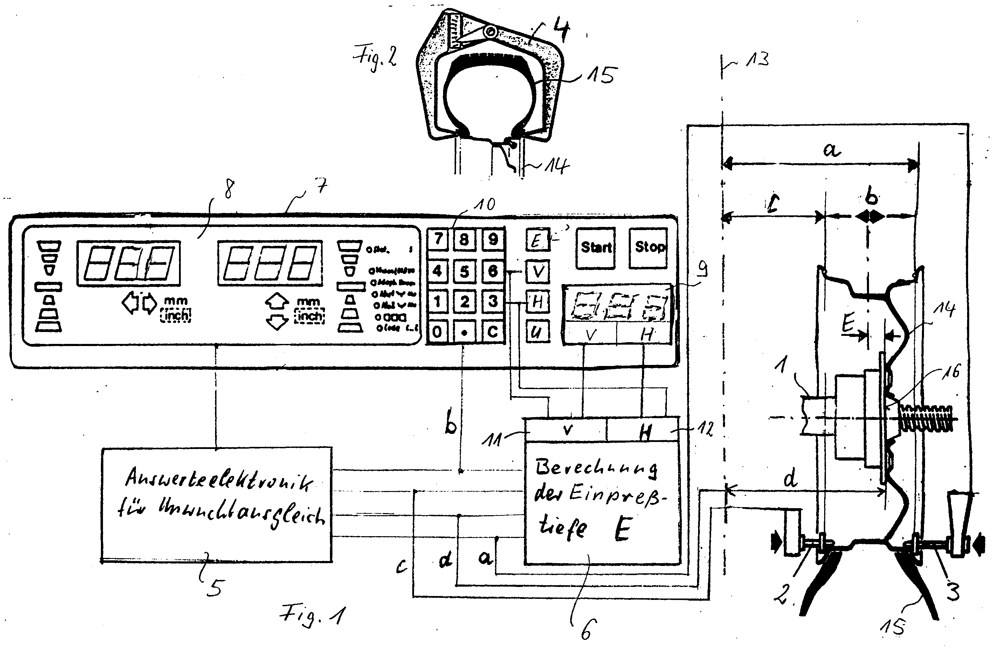

Die Einpreßtiefe E eines Scheibenrades 14 eines Kraftfahrzeugs ist bestimmt durch den axialen Abstand der inneren Scheibenfläche (Spiegelfläche), welche an einer Nabe einer Achse des Kraftfahrzeugrades anliegt zur Mitte der Felgenbreite. Zur Bestimmung dieser Eindpreßtiefe eines Scheibenrades 14 wird bei der Erfindung eine Radauswuchtmaschine verwendet. Hierzu wird das Scheibenrad 14 gegebenenfalls mit aufgezogenem Reifen 15 auf eine Hauptwelle 1 einer Radauswuchtmaschine aufgespannt wie es in der Fig. 1 dargestellt ist. Hierbei liegt die Innenseite der Radscheibe an einer wellenfesten Anschlagfläche 16 an. In bekannter Weise kann sich die Anschlagfläche an einem Aufspannflansch, welcher zum Aufspannen des Kraftfahrzeugrades auf die Hauptwelle 1 der Auswuchtmaschine dient, befinden. Ein Abstand d der Anschlagfläche 16 von einer Referenzebene 13 ist eine maschinenbezogene Größe und kann abgetastet werden oder fest in einer Auswerteelektronik 5 der Radauswuchtmaschine vorgegeben sein.

In bekannter Weise besitzt die Radauswuchtmaschine ferner Meßtaster 2 und 3 für Abstandsmessungen am äußeren und inneren Felgenhorn des Scheibenrades 14. Mit Hilfe der Meßtaster können Felgennennmaße, insbesondere die Felgenbreite b, durch Abstandsmessung von der Referenzebene 13 bestimmt werden. Hierzu können der axiale Abstand a des äußeren Felgenhorns und der axiale Abstand c des inneren Felgenhorns von der Referenzebene 13 gemessen und durch Differenzbildung a bis c die Felgenbreite bestimmt werden. Beim Abtasten werden die außenliegenden Teile der Felgenhörner abgetastet. Durch die Auswerteelektronik 5 wird unter Berücksichtigung der Materialdicke der Felge bzw. des Felgenhorns das Felgennennmaß der Felgenbreite b ermittelt.

Die Felgenbreite b kann auch direkt mit Hilfe eines in der Fig. 2 dargestellten Felgenbreitentasters 4 bestimmt werden und über eine Tastatur 10 in die Auswerteelektronik 5 der Maschine eingegeben werden.

Die von den Meßtastern 2 und 3 abgetasteten axialen Abstände a und c werden gleichzeitig einer Rechnereinrichtung 6 für die Berechnung der Einpreßtiefe des Scheibenrades 6 eingegeben. Falls der axiale Abstand d der Anschlagfläche 16 von der Referenzebene 13 abgetastet wird, wird dieser ebenfalls der Rechnereinrichtung 6 zugeleitet. Falls dieser axiale Abstand d in der Auswerteelektronik 5 vorgegeben ist, kann er bei der Berechnung der Einpreßtiefe von der Rechnereinrichtung 6 aus der Auswerteelektronik 5 abgerufen werden.

Falls die Felgenbreite b mit Hilfe des Felgenbreitentasters 4 (Fig. 2) abgetastet wird, wird durch die Tastatur 10 die Felgenbreite b sowohl der Auswerteelektronik 5 als auch der Rechnereinrichtung 6 zugeleitet.

Die Berechnung der Einpreßtiefe E kann durch Berechnung gemäß einer der beiden folgenden Formeln (1) und (2) erfolgen.

$$E = d - \frac{b}{2} - c \quad (1)$$

$$E = d + \frac{b}{2} - a \quad (2)$$

Bei der Berechnung gemäß Formel (1) wird der axiale Abstand des inneren Felgenhornes bzw. Meßpunktes der Felgenbreite und bei der Berechnung gemäß Formel (2) wird der axiale Abstand a des äußeren Felgenhornes bzw. des äußeren Meßpunktes der Felgenbreite b berücksichtigt. Bei beiden Berechnungsarten werden der axiale Abstand d der senkrecht zur Achse der Hauptwelle 1 verlaufenden Anschlagfläche 16 von der Referenzfläche 13 und die Felgenbreite b verwendet.

Die in der Rechnereinrichtung 6 berechnete Einpreßtiefe E kann in einem Anzeigefeld 9 einer Anzeigeeinrichtung 7, die auch ein mit der Auswerteelektronik 5 verbundenes Anzeigefeld 8 für den Unwuchtausgleich enthält, angezeigt werden. Im Anzeigefeld 9 kann beispielsweise digital die absolute Größe der Einpreßtiefe angezeigt werden. Ferner ist es möglich, eine Anzeige vorzusehen, durch die angegeben wird, ob das Rad an der Vorderachse V oder an der Hinterachse H montiert werden muß.

Falls die Einpreßtiefen für die Räder der Vorderachse und für die Räder der Hinterachse bekannt sind, können diese vorab über die Tastatur 10 in Speicher 11 und 12 eingegeben werden. Um die richtige Zuordnung in den Speichern zu haben, können hierzu entsprechende Tasten am Anzeigetableau vorgesehen sein. Bei der Berechnung der entsprechenden Einpreßtiefe des auf die Hauptwelle 1 aufgespannten Scheibenrades 14 wird dann nach Vergleich mit den entsprechenden Werten in den Speichern 11 und 12 durch eine zugeordnete Anzeige beispielsweise V für die Vorderachse und H für die Hinterachse oder durch eine andere Angabe dem Serviceman kenntlich gemacht, wo das gegebenenfalls noch ausgewuchtete Rad am Kraftfahrzeug montiert werden soll. Am Anzeigetableau der Anzeigeeinrichtung 7 kann eine Betätigungstaste E für die Iniziierung der Berechnung der Einpreßtiefe durch die Rechnereinrichtung 6 und eine Taste U für die Berechnung der Unwuchtausgleichsvektoren in den entsprechenden Ausgleichsebenen des Scheibenrades 14 bzw. Kraftfahrzeugrades vorgesehen sein.

## Patentansprüche

1. Verfahren zur Bestimmung der Einpreßtiefe eines Scheibenrades eines Kraftfahrzeugrades, **dadurch** gekennzeichnet, daß das Scheibenrad an einer Hauptwelle einer Radauswuchtmaschine angeordnet wird, wobei das Scheibenrad an seiner Scheibeninnenfläche (Spiegelfläche) an einer wellenfesten Anschlagfläche anliegt, daß die Felgenbreite des Scheibenrades erfaßt wird und daß die Einpreßtiefe aus der Felgenbreite und dem jeweiligen Abstand der an der Scheibenradinnenseite anliegenden Anschlagfläche und eines der beiden Felgenhörner bzw. Meßpunkte der Felgenbreite von einer Referenzebene an der Maschine ermittelt wird.

2. Verfahren nach Anspruch 1, dadurch gekennzeichnet, daß in Abhängigkeit von der ermittelten Einpreßtiefe eine Anzeige vorgesehen wird.

3. Verfahren nach Anspruch 2, dadurch gekennzeichnet, daß durch die Anzeige die Einpreßtiefe und/oder die Anordnung des Rades am Fahrzeug angezeigt wird.

4. Vorrichtung zur Durchführung eines Verfahrens nach Anspruch 1, **gekennzeichnet** durch eine Radauswuchtmaschine mit einer Hauptwelle (1) zum Aufspannen eines Kraftfahrzeugrades, Abtastmitteln (2-4) zum Abtasten der geometrischen Raddaten des auf die Hauptwelle (1) aufgespannten Rades und zur Bestimmung axialer Abstände bestimmter Radteile bezüglich einer Referenzebene (13) an der Maschine, einer Auswerteeinrichtung (5), welche in Abhängigkeit von den ermittelten Raddaten und während eines Meßvorgangs gewonnenen Meßwerten wenigstens einen Ausgleichsvektor (Ausgleichsmasse, Ausgleichswinkellage) bestimmt und einer Anzeigeeinrichtung (7,8) für den Unwuchtausgleich, wobei mit der Auswerteeinrichtung (5) eine Rechnereinrichtung (6) verbunden ist, die aus dem jeweiligen axialen Abstand eines der beiden Felgenhörner bzw. Meßpunkte der Felgenbreite (b) und der Anschlagfläche (16) von der Referenzebene (13) sowie der Felgenbreite (b) die Einpreßtiefe (E) berechnet.

5. Vorrichtung nach Anspruch 4, dadurch gekennzeichnet, daß die Anzeigeeinrichtung (7) ein Anzeigefeld (9) aufweist, welches zur Anzeige der von der Rechnereinrichtung (6) berechneten Einpreßtiefe an die Rechnereinrichtung (6) angeschlossen ist.

6. Vorrichtung nach Anspruch 6, dadurch gekennzeichnet, daß das Anzeigefeld (9) für die Einpreßtiefe eine Anzeige des Absolutwertes der Einpreßtiefe und/oder eine wahlweise Anzeige für die Vorder- oder Hinterachse eines Kraftfahrzeugs aufweist.

Fig. 2

Fig. 1

Berechnung der Einpreß-tiefe E

Auswerteelektronik für Unwuchtausgleich

Start   Stop

Europäisches
Patentamt **EUROPÄISCHER RECHERCHENBERICHT** Nummer der Anmeldung

EP 99 10 0809

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 358 496 A (SHANNON RES LTD) 14. März 1990 * Spalte 12, Zeile 33 – Spalte 13, Zeile 34; Abbildungen 5,6 * | 1 | G01M1/02 |
| A | PATENT ABSTRACTS OF JAPAN vol. 018, no. 192 (M-1587), 4. April 1994 & JP 06 001112 A (YOKOHAMA RUBBER CO LTD:THE), 11. Januar 1994 * Zusammenfassung * | 1 | |
| A | EP 0 468 369 A (BUZZI CARLO) 29. Januar 1992 * Spalte 4, Zeile 34 – Spalte 5, Zeile 30; Abbildung 1 * | 1 | |

RECHERCHIERTE SACHGEBIETE (Int.Cl.6)

G01M

Der vorliegende Recherchenbericht wurde für alle Patentansprüche erstellt

| Recherchenort | Abschlußdatum der Recherche | Prüfer |
|---|---|---|
| DEN HAAG | 23. April 1999 | Zafiropoulos, N |

## ANHANG ZUM EUROPÄISCHEN RECHERCHENBERICHT
## ÜBER DIE EUROPÄISCHE PATENTANMELDUNG NR.

EP 99 10 0809

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-1999

| Im Recherchenbericht angeführtes Patentdokument | Datum der Veröffentlichung | Mitglied(er) der Patentfamilie | | Datum der Veröffentlichung |
|---|---|---|---|---|
| EP 0358496 A | 14-03-1990 | IE | 67342 B | 20-03-1996 |
| | | AT | 118883 T | 15-03-1995 |
| | | AU | 625780 B | 16-07-1992 |
| | | AU | 4112289 A | 15-03-1990 |
| | | DE | 68921271 D | 30-03-1995 |
| | | DE | 68921271 T | 03-08-1995 |
| | | ES | 2070908 T | 16-06-1995 |
| | | US | 5189912 A | 02-03-1996 |
| EP 0468369 A | 29-01-1992 | IT | 1243276 B | 26-05-1994 |

Für nähere Einzelheiten zu diesem Anhang : siehe Amtsblatt des Europäischen Patentamts, Nr.12/82